Europäisches Patentamt

**European Patent Office**

Office européen des brevets

(19)

(11) Veröffentlichungsnummer: **0 074 551 B1**

(12) # EUROPÄISCHE PATENTSCHRIFT

(45) Veröffentlichungstag der Patentschrift:
16.07.86

(51) Int. Cl.⁴: **C 08 L 79/04, C 08 L 101/00**

(21) Anmeldenummer: **82107935.7**

(22) Anmeldetag: **28.08.82**

(54) **Formmassen, enthaltend Triketoimidazolidin-Präkondensate, deren Verwendung und Verfahren zur Herstellung eines dafür geeigneten Triketoimidazolidin-Präkondensat-Komposits.**

(30) Priorität: **02.09.81 DE 3134736**
**20.02.82 DE 3206128**

(43) Veröffentlichungstag der Anmeldung:
**23.03.83 Patentblatt 83/12**

(45) Bekanntmachung des Hinweises auf die Patenterteilung:
**16.07.86 Patentblatt 86/29**

(84) Benannte Vertragsstaaten:
**AT BE CH DE FR GB LI**

(56) Entgegenhaltungen:
**DE - A - 1 920 845**
**FR - A - 2 099 199**
**FR - A - 2 259 865**
**US - A - 4 108 843**

(73) Patentinhaber: **HOECHST AKTIENGESELLSCHAFT,
Postfach 80 03 20, D-6230 Frankfurt am Main 80 (DE)**

(72) Erfinder: **Höroldt, Ernst, Dr., Theresenstrasse 33,
D-6233 Kelkheim (Taunus) (DE)**
Erfinder: **Kraft, Kurt, Im Hopfengarten 16,
D-6200 Wiesbaden (DE)**
Erfinder: **Ritz, Jürgen, Dr., Am Hipperich 68,
D-6500 Mainz (DE)**
Erfinder: **Jakob, Franz, Dr., Schlossstrasse 34,
D-6238 Hofheim am Taunus (DE)**

ACTORUM AG

## Beschreibung

Es ist bekannt, Formmassen mit anorganischen und/oder organischen Füllstoffen herzustellen. Hierfür wurden bisher im grossen Masse Asbestfasern wegen ihrer vorteilhaften physikalischen Eigenschaften, wie Feuerfestigkeit, gute Abriebfestigkeit, hohe Härte verwendet. Beispielsweise zeigten derartige Mischungen als Bremsbeläge eine hohe Reibung. Asbest ist bekanntlich als Naturprodukt kristallin. Die Verarbeitung dieser Kristalle bringt den schwerwiegenden Nachteil mit sich, dass die Atemorgane erheblich beeinträchtigt werden, so dass sogar Lungenkrebs auftreten kann. Es wird daher seit einiger Zeit gefordert, diese Faser möglichst weitgehend zu ersetzen.

Es ist ferner bekannt, «Aramidfasern» auf der Basis von Terephthalsäurechlorid und p-Phenylendiamin herzustellen («Research Disclosure», Februar 1980, Seiten 74/75) und diese in Form einer Pulpe aus feinen Fasern (fibrillated) verschiedener Länge zu flachen Körpern wie Papier, gegebenenfalls in Kombination mit anderen Fasern wie solchen auf Basis von Cellulose, Polyester, Polyamid oder Asbest zu verarbeiten.

Eine andere Veröffentlichung («Textile Institute and Ind.», Februar 1980) beschreibt die Verwendung der Aramidfasern als Textileinlage für Kautschukartikel, insbesondere Fahrzeugreifen, als Verstärker für Kunststoffe und für verschiedene Anwendungen auf dem Automobilsektor, in der Luft- und Raumfahrt, wobei die Anwendungen nicht im einzelnen genannt sind. Ausserdem wird in dieser Druckschrift der Austausch von Asbest- oder Glasfasern in mit Aluminium beschichteten Bekleidungsstücken erwähnt. Bekannt ist auch, diese Fasern im Austausch für Asbest für Kupplungen und Bremsbeläge einzusetzen («Plastverarbeiter», Band 31, 1980, Seiten 527 und 528).

Diese Aramidfasern haben jedoch den Nachteil, dass sie ebenso wie Asbest kristallin sind, dass die Polykondensation sehr aufwendig ist und dass der Spinnprozess aus konzentrierter Schwefelsäure bei erhöhter Temperatur, z.B. 80 °C erfolgt. Dies bringt für die Praxis erhebliche Schwierigkeiten mit sich. Der kristalline Charakter dieser Fasern erfordert einen zusätzlichen Streck- und Orientierungsprozess, so dass sich die Herstellung verhältnismässig umständlich gestaltet.

Es wurde auch schon vorgeschlagen, Kohlefasern für Kupplungen und Bremsscheiben zu verwenden. Bei thermischer Belastung ist jedoch die Gefahr einer Strukturumwandlung von Diamantgitter zum Graphitgitter unter Beeinträchtigung der Festigkeit und Härte und unter Bildung von graphitähnlichen Gleiteigenschaften gegeben. Ausserdem ist es bekannt, dass unter bestimmten Voraussetzungen Kohlenstoff aus derartigen Fasern von Metallen (z.B. Stahl) aufgenommen wird und zu einer Verschlechterung der Eigenschaften, z.B. durch Metallcarbid-Bildung, führt.

Die Herstellung von Triketoimidazolidinringen aus Oxamidsäureestern und Isocyanaten und gegebenenfalls Polycarbonsäuren unter Bildung von Kondensationsprodukten mit Amid- und/oder Imidgruppen ist ebenfalls bekannt. Es wurde auch schon vorgeschlagen, diese Amid- und/oder Imidgruppen enthaltenden Kondensationsprodukte zur Herstellung von Fasern, Formkörpern und Überzügen, die mineralische Füllstoffe, vorzugsweise Glasfasern oder Graphit, enthalten, zu verwenden (z.B. FR-A-2 259 865).

Um die vorstehenden Schwierigkeiten zu vermeiden, liegt der vorliegenden Erfindung die Aufgabe zugrunde, in Formmassen die Asbestfasern möglichst weitgehend durch einen anderen Füllstoff zu ersetzen, der keine so umständliche Herstellungsweise wie die bekannten Aramidfasern erforderlich macht und der zusätzlich weniger kristallin ist, d.h. sogar eine amorphe Struktur mit den damit verbundenen Vorteilen aufweist.

Gegenstand der Erfindung ist eine Formmasse, enthaltend

a) 2,4,5-Triketoimidazolin-Präkondensate mit endständigen Oxamidsäureester-, Urethan- und/oder Isocyanatgruppen in Form von Fasern oder einer Pulpe als relativen Füllstoff,

b) mindestens eine weitere reaktive Komponente eines Bindemittels der Gruppe Phenolharze, Aminharze, Kohlenwasserstoffharze mit funktionellen Gruppen und/oder Polymerisationsharze mit funktionellen Gruppen und

c) übliche organische und/oder anorganische Füllstoffe.

Gegenstand der Erfindung ist ferner die Verwendung solcher Formmassen zur Herstellung von strahlen-, licht- und/oder wärmebeständigen und/oder abriebfesten Formkörpern, z.B. in Form von abriebfesten Bauteilen, und insbesondere für die Herstellung von Bremsbelägen, Kupplungsscheiben oder Zylinderkopfdichtungen.

Entgegen den bekannten Aramidfasern können die erfindungsgemäss verwendeten Triketoimidazolin-Füllstoffe durch Verdüsen als Pulpe hergestellt werden, und zwar direkt durch Auspressen einer Lösung in organischen Lösungsmitteln durch geeignete Düsen in ein Fällungsmedium, z.B. Wasser. Es wird also ein Arbeiten mit konzentrierter Schwefelsäure bei erhöhter Temperatur vermieden. Dadurch wird die Arbeitssicherheit erhöht. Diese kleinen Teilchen fallen in amorpher Form, also in Form kleiner, unregelmässiger Teilchen an, die eine grosse spezifische Oberfläche bedingt. Auch dadurch ist eine hohe Bindungsfähigkeit mit den gleichzeitig in der erfindungsgemässen Mischung vorhandenen reaktiven Komponenten, den Füllstoffen und gegebenenfalls anderen Armierungsstoffen gewährleistet. Diese Triketo-Verbindungen können aber auch durch einfaches Verspinnen sowohl auf nassem, als auch auf trockenem Wege zu Filamenten beliebigen Titers verarbeitet werden. Ein besonderer Vorteil der Triketoverbindungen liegt darin, dass auch nach einem Trockenspinnprozess Fasern hergestellt werden können, wobei ihne Zusatz von Fremdlösungsmitteln und Wasser, z.B. bei der Verstreckung oder zum Waschen gearbeitet wird, d.h., dass allein oder durch Temperaturbehandlung ein lösungsmittelfreier, verstreckter Faden erhalten werden kann. Alle diese Filamente lassen sich ohne Schwierigkeiten sogar zu Fasern sehr kurzer Schnittlänge, z.B. ca. 2,6 mm, verarbeiten.

Ferner erlauben die erfindungsgemäss eingesetzten Triketoverbindungen die Herstellung von pulver- oder pulpförmigen Produkten durch Sprühtrocknung.

Enthalten solche Formmassen die Triketoimidazolidin-Präkondensate in Form von Faser- oder Pulpmaterial, so können bei der Herstellung von Bremsbelägen und anderen Formkörpern, z.B. Reibbelägen, Dichtungen und Bauteilen Asbestfasern ersetzt werden. Bei Verwendung von Pulpe aus solchen Präkondensaten treten keine Probleme bei der Herstellung und Verarbeitung der Mischungen auf, auch sind die Temperaturbeständigkeit, Haftungs- und Einbindungsfähigkeit der Pulpe in den Formmassen hervorragend. Ferner zeichnen sich die damit hergestellten Reibbeläge durch gute Abriebeigenschaften aus.

Wie weiter gefunden wurde, kann man jedoch noch eine Verbesserung der Eigenschaften der Formmassen bzw. der daraus hergestellten Formkörper erzielen, wenn man als reaktiven Füllstoff das Komposit aus $a_1$) oder Pulpe aus 2,4,5-Triketoimidazolidin-Präkondensat mit endständigen Oxamidsäureester-, Urethan- und/oder Isocyanatgruppen und $a_2$) einer Pulpe anderer faserbildender Polymerer oder anstelle dieser Pulpe $a_2$) Fasern aus 2,4,5-Triketoimidazolidinen und/oder anderen Materialien verwendet. Das Komposit wird vorzugsweise in der Weise hergestellt, dass man die Lösung eines 2,4,5-Triketoimidazolidin-Präkondensats in eine Suspension von Fasern eindüst.

Die nach dieser verbesserten Ausführungsform erhaltenen Formmassen zeichnen sich dadurch aus, dass die Komposite aus der Triketoimidazolidin-Präkondensat-Pulpe (im folgenden nur als Pulpe bezeichnet) nicht nur hervorragende Reib-, Dichtungs- und Verfestigungseigenschaften bewirken, sondern auch eine Erhöhung der Wärmestandfestigkeit in Dichtungen. Die erfindungsgemäss verwendeten Komposite lassen sich leicht und homogen in die Formmassen einarbeiten und bewirken selbst bei sehr feinen Fasertitern von weniger als 3 dtex und kleinen Schnittlängen von weniger als 10 mm keine Verklumpungen. Erscheinungen, wie sie zuweilen bei Formmassen auftreten, in denen Fasern suspendiert sind, die z.B. beim Kalandrieren zu Bauteilen und Dichtungen in der Weise gerichtet werden, dass sie in den Formmassen in paralleler Anordnung eingebaut werden und die gewünschten Armierungs- und Verfestigungseigenschaften dann nur noch in dieser einen Richtung, und zwar parallel zur Faserachse ausüben, treten bei Verwendung der erfindungsgemäss vorgeschlagenen Komposite nicht auf. Hinzu kommt, dass die Zugfestigkeit und der Anfangsmodul noch gesteigert werden, was sich für einige Anwendungsbereiche, wie Kupplungsbeläge, günstig auswirkt.

Besonders bevorzugt werden Komposite verwendet, in denen die verwendeten Fasern in Wirrlage fest an der Pulpe gebunden sind und auch nach der Verarbeitung in den Formkörpern weitgehendst in Wirrlage vorliegen. Insbesondere solche Komposite aus Pulpe und Fasern, in die die Fasern in vollkommener Wirrlage eingebunden sind, können ihre Armierungsfähigkeit in den Formmassen nach allen Richtungen isotrop ausüben, wie es bisher nur von Asbest her bekant ist, und lassen sich ohne Schwierigkeiten in den Formmassen homogen verteilen und gut einarbeiten. Dabei ergänzen bzw. addieren sich sowohl die guten Eigenschaften der Pulpe, z.B. Haftvermittlung, Temperaturbeständigkeit, Abriebfestigkeit als auch die der eingesetzten Fasern, z.B. hohe Zugfestigkeit, hoher Anfangsmodul, in den Formmassen optimal.

Die Herstellung derartiger Komposite kann vorteilhaft durch Verdüsen, insbesondere durch Auspressen, der Präkondensat-Lösung, in organischen, vorzugsweise aprotischen, mit Wasser mischbaren Lösungsmitteln durch geeignete Düsen in eine Suspension, z.B. Aufschlämmung, der Verstärkungsfasern in einem Koagulationsbad erfolgen, in dem das Präkondensat und die Faser nicht löslich sind, z.B. in Wasser. Als Fällungsmittel können aber auch mit Wasser nicht mischbare Lösungsmittel, die sich von dem aprotischen Lösungsmittel gut abtrennen lassen, z.B. durch Destillation, wie Toluol, Xylol und höhere Alkohole verwendet werden, wodurch die Rückgewinnung der aprotischen Lösungsmittel in vielen Fällen erleichtert werden kann. Als Lösungsmittel kommen aprotische Lösungsmittel, insbesondere N-Methylpyrrolidon oder auch Dimethylformamid, Dimethylacetamid, Dimethylsulfoxyd oder Cyclohexanon in Frage.

Eine andere Methode zur Herstellung der Komposite besteht in der gleichzeitigen Verdüsung von Präkondensat und Fasern geeigneter Schnittlänge, z.B. der unten angegebenen, durch eine Mehrstoffdüse im Sprühturm oder auf anderen geeigneten Aggregaten.

Als Fasern sind die bekannten handelsüblichen Produkte geeignet, z.B. solche mit höherem Anfangsmodul und guter Temperaturbeständigkeit wie Polyaramide, z.B. die Polyamide der Iso- oder Terephthalsäure mit m- oder p-Phenylendiamin, Polyacrylnitrile, und zwar Homo- und Copolymere mit z.B. Acrylsäureestern wie des Methanols oder Äthanols, Polyoxadiazole, Polybenzimidazole, Fasern auf Basis von Phenolharzen oder Cellulose, wie Reyon- und Celluloseacetate, Kohlenstoff-Fasern und selbstverständlich auch Fasern aus Polytriketoimidazolidinen. Die Faserlänge und Faserdicke kann entsprechend dem Verwendungszweck in weiten Grenzen variiert werden. Die Faserdicke liegt im allgemeinen zwischen 0,2 und 12, vorzugsweise zwischen 0,4 und 6 dtex. Die Schnittlänge beträgt im allgemeinen von 1 bis 100 und vorzugsweise von 3 bis 10 mm. Auch die Verwendung von Mischungen verschiedener Fasertypen ist möglich und kann für bestimmte Zwecke vorteilhaft sein.

Auch das Verhältnis der Pulpe zu Faser im Komposit kann in weiten Grenzen variiert werden, wobei die Grenzen auch durch die Schnittlänge und Dicke der Faser beeinflusst werden. Im allgemeinen beträgt das Verhältnis Pulpe zu Faser 5:1 bis 1:5, vorzugsweise 3:1 bis 1:3.

Wird die Kompositherstellung nach der Fällungsmethode durchgeführt, beträgt die Faserkonzentration im Koagulationsbad im allgemeinen 1–20 g/l. Bei Verdüsung im Sprühturm sind Menge und Temperatur der Sprühluft und der Typ der eingesetzten Sprühdüse der chemischen Natur der Faser und vor allem deren Länge und Dicke anzupassen.

Die Auswahl der Faserkomponente, d.h. deren chemische Zusammensetzung, spielt naturgemäss eine Rolle für die Anwendungsgebiete der Formmassen. Sollen z.B. Formkörper hergestellt werden, an die keine extrem hohen Temperaturanforderungen gestellt werden, kann man Polyacrylnitrile verwenden. Für Formkörper mit einer höheren Temperaturbelastung eignen sich Fasern auf anderer Basis, z.B. Polyaramide und insbesondere Kohlenstoff. Soweit die faserbildenden Polymeren auch Pulpe bilden, kann man auch Mischungen aus Pulpen von Triketoimidazolidin-Präkondensat und derartige Polymeren, wie Polyacrylnitrilen einsetzen. In diesem Fall werden die Lösungen der eingesetzten Polymeren miteinander vermischt und gemeinsam verdüst. Die eingesetzten Fasern können selbstverständlich einer üblichen Vorbehandlung unterzogen werden wie Aufrauhen der Oberfläche oder Zerfasern mittels chemischer und/oder mechanischer Verfahren, wie sie z.B. aus der Technik für die Herstellung von Papier bekannt sind.

Nach einer weiteren Ausführungsform kann man die Formmassen noch dadurch verbessern, dass man in den Pulpen bzw. Kompositen noch eine kleine Menge, z.B. bis 15 Gew.-%, an aprotischen, stark polaren Lösungsmitteln, z.B. den obengenannten belässt. Diese kann z.B. 1–10, vorzugsweise 2 bis 5 Gew.-% betragen. Hierdurch lässt sich erreichen, dass die Produkte unter Druck und bei erhöhter Temperatur noch fliessfähig sind und sich wie Thermoplaste verhalten, die ein ausgezeichnetes Haftvermögen zu den anderen Komponenten der Formmassen aufweisen. In anderen Fällen hat es sich als zweckmässig erwiesen, den Lösungsmittel-Gehalt auf weniger als 1, vorzugsweise weniger als 0,5 Gew.-% zu senken.

Auch in den Kompositen fallen die Anteile an Pulpe in amorpher Form an, was zu den oben angegebenen Vorteilen führt.

Die genannten Triketoimidazolidin-Präkondensate werden in der Regel in üblicher Weise durch Umsetzung von Bis-oxamidsäureestern mit Diisocyanaten allein oder in Kombination mit mindestens zweibasischen Carbonsäuren bei erhöhter Temperatur, z.B. von 50 bis 200, vorzugsweise 50 bis 180 °C hergestellt. Derartige Umsetzungen sind beispielsweise in den DE-PS 1 916 932, DE-OS 1 920 845, DE-OS 2 030 233, DE-OS 2 139 005 und DE-OS 2 303 239 beschrieben. Der Ausdruck «Präkondensate» bezeichnet sowohl den polymeren bzw. oligomeren Charakter dieser Substanzen als auch deren Fähigkeit zur Weiterreaktion unter Molekülvergrösserung. Als Komponenten eignen sich insbesondere 4,4'-Bis(äthoxalyl-amino)diphenylmethan, Trimellithsäureanhydrid und 4,4'-Diisocyanato-diphenylmethan. Das Präkondensat kann bei 150 bis 480, vorzugsweise 180 bis 350 °C zu einem höhermolekularen Produkt umgewandelt und verfestigt werden.

Die reaktiven Endgruppen der Präkondensate, d.h. die Oxamidsäureester-Gruppen, Isocyanat- und/oder Urethangruppen, können unter den Verarbeitungsbedingungen der Formmassen auch mit den übrigen reaktiven Komponenten oder miteinander unter Ausbildung neuer 2,4,5-Triketoimidazolidinringe und unter Molekülvergrösserung und/oder mit den übrigen reaktiven Komponenten der erfindungsgemässen Mischungen reagieren. Dies führt zu einer noch intensiveren Bindung zwischen den Triketoimidazolidinen und den anderen reaktiven Substanzen so dass zusätzlich zu einem Verstärkungseffekt eine sehr stabile Haftung erzielt wird. In speziellen Fällen kann ein geringer Gehalt an Lösungsmitteln, z.B. N-Methylpyrrolidon, mit Triketoimidazolidin diesen Effekt noch begünstigen. Die Fähigkeit zur Molekülvergrösserung ist ein erheblicher Vorteil gegenüber den Polyaramidsystemen, weil sich für die Formmassen gemäss der Erfindung niedermolekulare Systeme mit geringer Viskosität, guter Löslichkeit und anderen für die leichte Verarbeitbarkeit wesentlichen Eigenschaften eignen, die sich z.B. durch Behandlung bei erhöhter Temperatur in hochmolekulare Systeme unter gleichzeitiger Formgebung umwandeln lassen.

In den Pulpen liegen die Triketoverbindungen in Form von Fibriden, d.h. kleinteiligen Fasern vor, deren Länge und Durchmesser in weiten Grenzen variieren können, wie es ähnlich auch bei Asbest als wünschenswerte Eigenschaft angesehen wird. Im allgemeinen beträgt die Länge mehr als 1 mm und der Durchmesser mehr als 2, vorzugsweise mindestens 3 µm. Je nach Wunsch können Länge und Durchmesser auch kleiner gewählt werden. Durch die Verwendung der Komposite besteht keinerlei Gefahr für eine Lungengängigkeit und für den Verarbeiter.

Durch geeignete Auswahl der Bedingungen bei der Herstellung der Pulpe wie Konzentration in der Lösung, Temperatur, Auspressdruck und Düsenabmessungen lassen sich die Eigenschaften der Fibride weitgehend steuern. So bedingt beispielsweise eine höhere Konzentration der Triketoverbindungen eine grössere Länge und grösseren Durchmesser der Fibride. Durch die Anwendung geringer Lösungskonzentrationen und Viskositäten bei entsprechendem Überdruck in der zu extrudierenden Lösung erreicht man, dass sich kein Endlosfaden bildet, sondern dass ein kurzfaseriges Produkt erhalten wird. Die Wahl des Düsendurchmessers ist vor allem massgebend für den Durchmesser der Fibride. Falls der zu extrudierenden Lösung ein Nichtlöser, z.B. Alkohol zugesetzt wird, können kürzere und/oder dünnere Fibride erzielt werden.

Die Beschaffenheit der Oberfläche der Fibride ist nicht nur abhängig vom Auspressdruck der Lösung, sondern auch von dem Fällungsmedium, in das die Lösung verdüst wird. Wenn die Lösung beispielsweise in den Nichtlöser Wasser verdüst wird, erhält man eine grosse spezifische Oberfläche. Enthält das Koagulationsbad hingegen einen Anteil an Lösungsmittel für die Substanz, z.B. den obengenannten aprotischen, so ergibt sich ein Fibrid mit glatter Beschaffenheit, aber kleiner spezifischer Oberfläche. Das Wasserrückhaltevermögen der Fasern aus Triketoverbindungen beträgt im allgemeinen von 8 bis 200 Gew.-%, meistens um 10 Gew.-%, während das der Pulpe gewöhnlich zwischen 50 und 200 Gew.-% liegt. Es ist um so grösser, je grösser die spezifische Oberfläche ist. Die spezifische Oberfläche der Pulpe bzw. der in den Kompositen enthaltenen Triketoimidazolidin-Fibride beträgt z.B. 10 bis 100 m²/g, die Fibridlänge liegt im allgemeinen im mm-Bereich, z.B. bei höchstens 10 mm, vorzugsweise höchstens 5 oder 7 mm, der Fibriddurchmesser im μm-Bereich, z.B. bei höchstens 100 μm, vorzugsweise höchstens 30 μm.

Die spezifische Wärme der Präkondensate kann je nach der chemischen Struktur der Triketoverbindungen schwanken. Sie kann beispielsweise 0,22 bis 0,38, vorzugsweise 0,28 bis 0,36 cal/g und °C betragen. Diese Kennzahl ist dann von Bedeutung, wenn die aus den erfindungsgemässen Formmassen hergestellten Formkörper beispielsweise einer erheblichen mechanischen Beanspruchung, wie Reibung, ausgesetzt sind. Die spezifische Wärme dieser Triketoverbindungen ist etwa gleich der des Asbests. Wie bei diesem wird auch bei Formkörpern aus den erfindungsgemässen Formmassen eine übermässige Erhitzung durch Reibung vermieden; die daraus hergestellten Formkörper weisen eine gute Wärmefestigkeit und Wärmeformbeständigkeit auf. Ausserdem haben die Triketoverbindungen eine ausgezeichnete chemische Beständigkeit, insbesondere sehr gute Alkalibeständigkeit.

Von ganz besonderer Bedeutung ist die Tatsache, dass die Triketo-Präkondensate, insbesondere die Pulpe-Komponente keinerlei mikrokristalline Anteile enthalten, wie röntgenographisch festgestellt wurde. Sie sind vielmehr vollkommen amorph. Die zur Kompositbildung verwendbaren Fasern sind zwar kristallin, enthalten aber keinerlei mikrokristalline Anteile lungengängiger Dimensionen. Das hat zur Folge, dass sie und das Komposit auch nicht in lungengängige kleine Teilchen gespalten werden kann, wie dies beim Asbest der Fall ist. Bekanntlich ist das Verhältnis der Länge zum Durchmesser der Asbestteilchen entscheidend für die Lungentoxizität. Dieses Verhältnis stellt sich beim Asbest u.a. durch die leichte Spaltbarkeit und die typische Kristallstruktur ein. Selbst beim Schleifen der erfindungsgemäss verwendeten amorphen Materialien, z.B. der Komposite können Stäube mit diesem für die Lungentoxizität charakteristischen Verhältnis von Länge zum Teilchendurchmesser praktisch nicht auftreten.

Die in den erfindungsgemässen Formmassen enthaltenen Fibride und Komposite aus den Triketoverbindungen haben den wesentlichen Vorteil, dass sie im Gegensatz zu Asbest staubfrei sind.

Das stellt einen erheblichen technischen Fortschritt dar, weil dadurch eine Belästigung der Umwelt und eine gesundheitliche Beeinträchtigung des verarbeitenden Personals sowie der Verbraucher wegfällt. Eine weitere günstige Eigenschaft der Fibride und Komposite liegt darin, dass die Triketo-Verbindungen gegenüber Ölen, Benzin und Schmierfett beständig sind, d.h. dass ihr Ölaufnahmevermögen besonders gering ist. Dies ist vor allem für die Praxis von Bedeutung, wenn die aus den Formmassen hergestellten Formkörper beispielsweise im Kraftfahrzeugsektor, Maschinenbau, Bausektor, oder dergleichen zur Anwendung kommen. Weitere Vorteile der verwendeten Triketoverbindungen liegen darin, dass diese nicht entflammbar sind und bei längerer Einwirkung hoher Temperaturen, z.B. einer Zündquelle, keine toxischen Produkte entstehen. Die erwähnte Staubfreiheit der Produkte stellt einen erheblichen Vorteil gegenüber den Eigenschaften der bekannten Formkörper dar, für die bisher gewöhnlich Asbest verwendet wurde. Eigenschaften wie Zugfestigkeit und Anfangsmodul werden andererseits durch die im Komposit enthaltene Faserkomponente erhöht.

Das Mengenverhältnis der Komponente a) zu den übrigen Bestandteilen, vor allem zur Komponente b), wird man im allgemeinen so wählen, dass mindestens 15, vorzugsweise mindestens 30% der funktionellen Gruppen der Komponente b) mit den Triketo-Verbindungen reagieren.

Als Füllstoffe c) werden vorteilhaft anorganische Füllstoffe mineralischer, silikatischer und/oder metallischer Natur mit hoher thermischer Belastbarkeit und – sofern es sich um nichtmetallische Füllstoffe handelt – mit geringer Wärmeleitfähigkeit verwendet. Geeignete derartige Füllstoffe sind beispielsweise Mineralpulver wie Gesteinsmehl, Schiefermehl, Marmorpulver, Quarzsand, Quarzmehl, Kreide, Glasmehl, Glasfasern, Graphit, Metallpulver, Metallspäne, Metalloxyde und übliche anorganische Pigmente. Es ist auch möglich, Asbestfasern als Füllstoffe, allerdings nur in untergeordneter Menge in Kombination mit anderen Füllstoffen einzusetzen, wenn gesundheitsschädliche Folgen vermieden werden können.

Ferner sind auch organische Füllstoffe wie Cellulosefasern, z.B. Holzmehl, Sägemehl, Cellulosederivate, wie Celluloseäther oder -ester, organische Pigmente, wie Phthalocyanine, Chinacridone, Anthrachinonpigmente oder dergleichen geeignet. Ausserdem sind auch Elastomere und Kohlenwasserstoffharze, jeweils ohne funktionelle Gruppen, als organische Füllstoffe verwendbar. Derartige Kohlenwasserstoffharze sind z.B. solche aus Mono- und/oder Diolefinen einschliesslich cyclischen Monomeren, wie Cyclopentadien, Dicyclopentadien, ferner aus Aromaten, Vinyl- oder Allylverbindungen oder aus Kohlenwasserstoff-Fraktionen, wie sie bei der Erdöldestillation anfallen. Geeignete Elastomere sind vor allem Natur- oder Kunstkautschuk, wie Styrol-Kautschuk, Acrylnitril-Kautschuk, Polybutadien, Butylkautschuk, Polyisopren, Äthylen-Propylen-Dien-Terpolymer-Kautschuk, jeweils einzeln oder im Gemisch.

In einzelnen Fällen kann es auch zweckmässig sein, den Formmassen noch bis zu 80, vorzugsweise bis zu 20 Gew.-%, bezogen auf den Präkondensatanteil der Pulpe-Komponente, Fasern mit hoher Zugfestigkeit und hohem Anfangsmodul und, für spezielle Zwecke, auch mit hoher Temperaturbeständigkeit (z.B. zum Zweck der weiteren Verbesserung der Eigenschaften von Reibkörpern) als Komponente c) zuzusetzen, z.B. die oben genannten.

Geeignete Phenolharze (Komponente b) sind Resole oder Novolake, letztere zusammen mit geeigneten Härtern, wie Hexamethylentetramin, Oxalsäure oder dergleichen. Als Phenolkomponente können sowohl unsubstituierte als auch substituierte, ein- oder mehrwertige, ein- oder mehrkernige Phenole wie Phenol, Resorcin, Brenzkatechin, Bisphenole, wie 4,4'-Diphenylolpropan oder -methan oder deren Substitutionsprodukte, wie Mono- oder Polyalkylderivate, z.B. Butyl- oder Octylphenol, als solche oder in Form von Gemischen eingesetzt werden. Als Aldehydkomponente kommt vor allem Formaldehyd in Betracht.

Geeignete Aminharze sind Harnstoffharze, Guanaminharze, vorzugsweise jedoch Melaminharze oder deren Substitutions- bzw. Verätherungsprodukte, insbesondere deren Alkylderivate. Als Aldehydkomponente kommt auch hier vor allem Formaldehyd in Betracht.

Die Epoxydharze können aromatischer, aliphatischer und/oder cycloaliphatischer Natur sein. Geeignete Epoxydharze sind z.B. Glycidylester- und/oder -äthergruppen enthaltende Harze, epoxydierte Öle, epoxydierte Fettsäuren und deren Ester, epoxydierte Polyhydroxyverbindungen, Glycidylreste aufweisende Zuckerderivate, vorzugsweise jedoch Polyepoxyde auf der Basis von 4,4'-Diphenylolpropan und/oder -methan und Epihalogenhydrin, vorzugsweise Epichlorhydrin.

Geeignete Polyesterharze sind übliche ungesättigte und/oder gesättigte Polyester, Alkydharze, Polyätherester, Amid- und/oder Imidgruppen enthaltende Polyester, die jeweils noch freie OH- und/oder COOH-Gruppen haben, oder Copolymere mit Estergruppen, die noch OH- und/oder COOH-Gruppen aufweisen.

Geeignete reaktive Kohlenwasserstoffharze sind z.B. solche, die noch mit einer Carbonsäure, deren Anhydrid oder anderen reaktiven Gruppen, wie Hydroxylgruppen enthaltenden Estergruppen, Sulfhydril-, Sulfid-, Disulfid- und/oder Sulfochloridgruppen modifiziert sind. So kommen z.B. vorvulkanisierte Butadien-, Isopren- oder Chloroprenpolymerisate oder auch sulfochloriertes Polyäthylen als reaktives Elastomeres in Frage. Andere geeignete reaktive Polymere sind z.B. Acrylharze mit freien OH-, NH$_2$-, CON$<^R_H$-, CONH$_2$- und/oder COOH-Gruppen, worin R Alkyl mit z.B. 1 bis 8 C-Atomen ist.

Die erfindungsgemässen Formmassen haben den Vorteil, dass sie erheblich umweltfreundlicher sind als vergleichbare Massen mit einem wesentlichen Anteil an Asbestfasern.

Die Triketoverbindungen und insbesondere die Komposite finden vielseitige Verwendung zur Herstellung von Formkörpern. Die Pulpe der Triketoverbindungen zeichnet sich durch ein besonders gutes Adhäsionsvermögen an den verschiedensten Stoffen, wie an den anderen Füllstoffen und dem reaktiven Bindemittel, aus. Die Triketoverbindungen und insbesondere die Komposite sind hervorragend zur Verstärkung und Armierung der erfindungsgemässen Formmassen geeignet. Die Formmassen können unter anderem wegen der guten Alkalibeständigkeit des Präkondensats mit Vorteil zur Verstärkung von zementhaltigen Formteilen, z.B. Platten, eingesetzt werden. Sie sind auch sehr gut für solche Formkörper geeignet, die starker Strahlen-, Licht-, Wärme- und/oder mechanischer Einwirkung ausgesetzt sind, wie Formteilen für medizinische, technische und Haushaltszwecke, z.B. in der Knochenchirurgie, als Elemente im Maschinenbau, Flug-, Schiff- und Fahrzeugwesen, als Bauteile für die Elektrotechnik, z.B. für Griffe und Isolationsmaterial, in der Elektronik, z.B. für Leiterplatten sowie für Armaturen, Kupplungs-, Brems- und Reibbeläge bzw. Reibelemente, also z.B. Kupplungsscheiben, insbesondere im Reibräder-Bereich, und für Zylinderkopfdichtungen oder im Baubereich als Bauteile, z.B. Bauplatten, Wärme-Isoliermaterial, Fussbodenbelag, Dachbedeckungen oder dergleichen, ferner zur Herstellung thermostabiler sowie chemisch beständiger Dichtungsmaterialien.

Gegenstand der Erfindung ist schliesslich auch ein Verfahren zur Herstellung eines Komposits aus Triketoimidazolidin-Präkondensat-Pulpe und Fasern, das dadurch gekennzeichnet ist, dass man die Lösung eines Triketoimidazolidin-Präkondensats in organischen, vorzugsweise aprotischen, wie den obengenannten, und mit den nachfolgend genannten Lösungsmitteln mischbaren, Lösungsmitteln gleichzeitig, aber getrennt, mit Fasern verdüst oder in eine Suspension von Fasern in einem Koagulationsbad, z.B. halogenierten, vor allem chlorierten Kohlenwasserstoffen, wie Methylenchlorid, Chloroform oder Tetrachlorkohlenstoff oder Wasser, eindüst, in dem das Präkondensat und die Faser nicht löslich sind. Derartige Komposite zeichnen sich dadurch aus, dass die verwendeten Fasern im wesentlichen in Wirrlage an der Pulpe gebunden sind.

In den nachfolgenden Versuchsbeschreibungen bedeuten % Gew.-%.

I. Herstellung der Triketoimidazolidine
A) 199 g 4,4'-Bis(äthoxylylamin)-diphenylmethan (0,5 Mol) und 96 g Trimellithsäureanhydrid (0,5 Mol) wurden mit 544 g N-Methylpyrrolidon nach Zusatz von 1 g Lithiumbenzoat und 5 ml Tributylamin (Wassergehalt weniger als 0,05%) auf 120°C erhitzt und innerhalb von 30 Minuten in 250 g 4,4'-Diisocyanato-diphenylmethan eingetragen. Anschliessend wurde 4 bis 6 Stunden bei 120°C bis zur Beendigung der CO$_2$-Abspaltung gerührt. Nach dem Abkühlen wurden 1060 g einer klaren, rotbraunen, hochviskosen Kondensatlösung erhalten. Festkörpergehalt etwa 50%.

B) 400 g (1 Mol) 4,4'-Di-äthoxalylamino-diphenyläther wurden mit 252 g (1 Mol) 4,4'-Di-isocyanato-diphenyläther und 650 g N-Methylpyrrolidon bei Raumtemperatur verrührt. Zu der breiigen Mischung wurden 7 ml Tri-n-butylamin gegeben. Die Temperatur stieg bis gegen 60 °C. Es wurde nun 6 Stunden gerührt, ohne dass Wärme zugeführt wurde. Die so erhaltene, klare, bräunlichgelbe Lösung hatte eine Viskosität von etwa 1400 cP (20 °C).

C) 398 g (1 Mol) 4,4'-Di-äthoxalylamino-diphenylmethan wurden in 800 g N-Methylpyrrolidon unter Zugabe von 10 ml Triäthylamin bei 70 °C gelöst; portionsweise wurden 500 g (2 Mol) 4,4'-Di-isocyanato-diphenylmethan zugegeben. Die Temperatur überschritt 80 bis 85 °C nicht. Nach vollendeter Zugabe wurde noch 6 Stunden bei Raumtemperatur gerührt und anschliessend mit 100 g eines Gemisches von Phenol und Kresol (Verhältnis 1 : 1) verdünnt. Es wurde eine klare, gelbe Lösung erhalten.

D) 756 g (3 Mol) 4,4'-Diisocyanato-diphenyläther wurden in 1154 g N-Methylpyrrolidon-Cyclohexanon-Gemisch (Gewichtsverhältnis 30:70) auf 100 °C erwärmt und nach Zugabe von 20 ml Triäthylamin innerhalb von 2 Stunden 398 g (1 Mol) Bis-(äthoxalylamino)-diphenylmethan eingetragen. Nach 45 Minuten wurden 161 g (0,5 Mol) Benzophenontetracarbonsäuredianhydrid innerhalb einer Stunde unter kräftigem Rühren zugegeben. Die Viskosität stieg dabei sehr stark an. Nach dreistündigem Rühren bei 100 bis 110 °C wurde eine klare, rotbraune Polymerenlösung erhalten. Ausbeute: 2400 g (Festkörpergehalt ungefähr 52%).

E) 272 g (0,5 Mol) 4,4'-Bis-(4-carboxy-phthalimido)-diphenylmethan und 199 g (0,5 Mol) 4,4'-Bis-(äthoxalylamino)-diphenylmethan wurden in 1040 g N-Methylpyrrolidon auf 120 °C erhitzt, 5 ml Tributylamin zugegeben und innerhalb 90 Minuten 375 g (1,5 Mol) 4,4'-Diisocyanato-diphenylmethan zugegeben. Aus der ursprünglich klaren Lösung schieden sich feine Kristalle ab.

Anschliessend wurde bei 190 bis 198 °C so lange kondensiert, bis das nun völlig klare, viskose Reaktionsgemisch bei Raumtemperatur eine klare, zähe Polymerenlösung ergab. Dies war nach etwa acht bis zehn Stunden der Fall. Ausbeute: 1790 g einer klaren, hochviskosen Polymerenlösung.

F) 98,4 g (0,2 Mol) rohes, 1,4-Bis-(p-äthoxalylaminophenoxy)-benzol (Schmelzpunkt 165 °C) und 19,2 g (0,1 Mol) Trimellithsäureanhydrid wurden in 100 ml Dimethylacetamid bei 130 °C gelöst und mit 0,5 ml Tribenzylamin versetzt. Innerhalb einer Stunde wurde bei dieser Temperatur ein Gemisch von 47,5 g (0,15 Mol) 4,4'-Diisocyanatodiphenylmethan und 45,4 g (0,18 Mol) 4,4'-Diisocyanato-diphenyläther eingetragen. Anschliessend wurde bei 140 °C vier Stunden nachgerührt, auf 70 °C abgekühlt und 100 g technisches Kresolgemisch eingerührt. Nach dem Abkühlen auf Raumtemperatur wurden 402 g einer klaren, hochviskosen Polymerenlösung erhalten, deren Festkörpergehalt etwa 50% betrug.

G) In einem 10 l Dreihalskolben wurden 564 g (1 Mol) 4,4'-Bis(4-carboxyphthalimido)-diphenylsulfon, 548 g (1 Mol) 4,4'-Bis(4-carboxyphthalimido)-diphenyläther in 2800 ml N-Methylpyrrolidon und 2000 ml Dimethylsulfoxyd bei 60 °C aufgeschlämmt. Dann wurden 67 g (0,2 Mol) des Azomethins (Schmelzpunkt = 300 °C unter Zersetzung) aus 2-Oxy-naphthaldehyd-1 und 5-Aminoisophthalsäure zugegeben. Anschliessend wurde auf 140 °C erhitzt. Bei dieser Temperatur wurden innerhalb 3 Stunden 199 g (0,5 Mol) 4,4'-Bis-(äthoxalylamino)-diphenylmethan, 176,4 g (0,7 Mol) 4,4'-Diisocyanato-diphenyläther und 500 g (2,0 Mol) 4,4'-Diisocyanato-diphenylmethan eingetragen. Es wurde so lange bei 150 °C gerührt, bis die $CO_2$-Abspaltung beendet war (ca. 6 bis 8 Stunden). Nach Zugabe von 2 g Tributylamin wurde die Temperatur auf 200 °C gesteigert und 4 Stunden gehalten. Anschliessend wurden 400 ml Cyclohexanon und 200 ml Diäthylbenzol zur Verdünnung eingeführt. Nach Abkühlen wurde eine hellorangegelbe, hochviskose Polymerlösung erhalten. Der Festkörpergehalt lag bei etwa 25 Gew.-%. Ausbeute: 7200 g. Die Inhärenzviskosität des Polymeren lag bei 0,44 (20 °C), gemessen in 1%iger Lösung.

H) 158,5 g (0,8 Mol) 4,4'-Diaminodiphenylmethan wurden unter Rühren in 1280 ml N-Methylpyrrolidon bei Raumtemperatur gelöst. Dann wurden portionsweise 307,2 g (1,6 Mol) Trimellithsäureanhydrid bei 80 °C zugegeben. Nach Zusatz von Toluol als Azeotropmittel wurde die Temperatur auf 180 °C gesteigert und so lange kondensiert, bis kein Wasser mehr abgespalten wurde. Dies war nach etwa 2 Stunden der Fall. Jetzt wurden 79,6 g (0,2 Mol) 4,4'-Bis-(äthoxalylamino)-diphenylmethan und 11,4 g (0,04 Mol) des Azomethins (Schmelzpunkt = 287 °C ) aus 5-Aminoisophthalsäure und Salicylaldehyd zugegeben. Nach Abkühlen auf 160 °C wurden 250 g (1 Mol) 4,4'-Diisocyanato-diphenylmethan eingetragen. Es wurde bei 160 bis 180 °C bis zur Beendigung der $CO_2$-Abspaltung kondensiert. Anschliessend wurde die Temperatur auf 205 °C erhöht und über eine Füllkörperkolonne der bei der Kondensation frei werdende Alkohol so abdestilliert, dass die Kopftemperatur 125 °C nicht überschritt. Danach wurde abgekühlt und mit 100 ml Dimethylacetamid, 100 ml Hexamethylphosphorsäuretriamid und 90 ml Cyclohexanon verdünnt.

Es wurden 2300 g einer gelbbraunen, hochviskosen Lösung mit einem Festkörpergehalt von etwa 31% erhalten. Die Inhärenzviskosität des Polymeren, gemessen in 1%iger Lösung, betrug 0,50 (20 °C).

I) 218,4 g (0,4 Mol) 4,4'-Bis-(4-carboxyphthalimido)-diphenylmethan und 3,55 g (0,01 Mol) 5-(4-Carboxyphthalimido)-isophthalsäure wurden in 400 ml N-Methylpyrrolidon gelöst und bei 120 °C 39,8 g (0,1 Mol) 4,4'-(Bisäthoxalylamino)-diphenylmethan eingerührt. Nach Abkühlen auf 100 °C wurde eine Lösung von 130 g (0,52 Mol) 4,4'-Diisocyanato-diphenylmethan in 260 ml N-Methylpyrrolidon innerhalb von 2 Stunden eingetropft. Dann wurde nach Zugabe von 0,5 g Dibutylzinn-dilaurat bei 170 °C so lange kondensiert, bis die $CO_2$-Abspaltung beendet war. Nach Temperatursteigerung auf 200 °C erfolgte die Zugabe von 2,85 g (0,01 Mol) des Azomethins aus 5-Aminoisophthalsäure und Salicylaldehyd. Bei dieser Temperatur wurde der bei der Kondensation frei gewordene Alkohol abdestilliert, wie im Beispiel H beschrieben. Anschliessend wurde auf 205 °C erhitzt und 4,9 g Cobaltoctoat, gelöst in 20 g Dimethylsulfoxyd, zugegeben und mit 200 ml N-Methylpyrrolidon verdünnt. Nach dem Abkühlen auf Raumtemperatur wurden 1150 g einer klaren, hochviskosen, braunorange gefärbten Lösung mit einem Festkörpergehalt von etwa 29% erhalten. Inhärenzviskosität: 0,67 (1%ige Lösung des Festpolymeren in N-Methylpyrrolidon bei 20 °C).

J) 79,2 g (0,4 Mol) 4,4'-Diaminodiphenylmethan und 153,6 g (0,8 Mol) Trimellithsäureanhydrid wurden mit 200 ml N-Methylpyrrolidon und 200 ml Dimethylsulfoxyd verrührt. Nach Zugabe von Xylol als Azeotropmittel wurde bei 190 °C so lange kondensiert, bis kein $H_2O$ mehr abgespalten wurde. Danach wurde auf 120 °C abgekühlt und 2,5 g Triäthylamin und 0,5 g Butyltitanat zugemischt. Anschliessend wurden 39,8 g (0,1 Mol) des Azomethins aus 5-Aminoisophthalsäure und 2-Hydroxynaphthaldehyd-1 eingetragen. Bei 100 °C wurden dann 130 g (0,52 Mol) 4,4'-Diisocyanatodiphenylmethan, gelöst in 260 ml N-Methylpyrrolidon, innerhalb einer Stunde zugetropft. Nach Beendigung der Zugabe wurde auf 202 °C erhitzt und 6 Stunden bei dieser Temperatur zu Ende kondensiert. Nach Abkühlen auf 160 °C wurde mit 200 ml Cyclohexanon verdünnt. Man erhielt 1160 g einer hellgelben und klaren Polymerlösung mit einem Festgehalt von etwa 30%. Die Viskosität der Lösung betrug etwa 24 000 cP (20 °C).

II) Herstellung der Füllstoffe und Komposite

A) Eine 12%ige Triketoimidazolidin-Präkondensat-Lösung gemäss I A), wurde unter Rühren in einem Druckkessel aufgeheizt. Durch ein Verdüsungsrohr wurde die heisse Lösung in einem mit Wasser gefüllten Vorlagebehälter entspannt. Die dabei anfallende Nasspulpe wurde aus dem Wasser abfiltriert und durch Waschen vom N-Methylpyrrolidon befreit. Die gewaschene Pulpe wurde in einem Fluidmischer aufgewirbelt und anschliessend im Vakuumtrockenschrank getrocknet. Die erhaltene Pulpe hatte ein Schüttgewicht von 33,3 g/l bei einem N-Methylpyrrolidon-Restgehalt von 0,2% und einem Wasserrückhaltevermögen (nach DIN 53 814) von 161,3%. Die spezifische Oberfläche lag bei 39 m²/g; Länge der Fibride 1 bis 3 mm, Durchmesser ca. 3 bis 8 μm.

B) Eine 12%ige Lösung des Triketoimidazolidins gemäss I B) in N-Methylpyrrolidon wurde chargenweise in einen Autoklaven eingeführt. Aus dem Autoklaven wurde diese Lösung bei Raumtemperatur unter einem Überdruck mit Druckluft in fliessendes Wasser verdüst. Die Nasspulpe wurde mit Wasser gewaschen und dann im Umlufttrockenschrank auf eine Restfeuchte von 2,5 % getrocknet. Die längsten Fibride in der Pulpe sind 7 mm bei einem Durchmesser von ca. 12 μm.

C) Eine 30%ige entgaste und auf 40 °C erwärmte Lösung des nach I H) hergestellten Präkondensats in N-Methylpyrrolidon wurde durch eine Spinndüse aus einem Trockenspinnschacht zu Fäden versponnen. Der Spinnfaden wurde aus dem Schacht abgezogen und aufgespult. Der anschliessend mit heissem Wasser gewaschene Spinnfaden wurde bei erhöhter Temperatur verstreckt und anschliessend zu einer Stapelfaser von 100 mm Schnittlänge geschnitten. Die Faser besass einen Titer von 1,9 dtex bei einer Reissfestigkeit von 26 cN/tex und einer Reissdehnung von 6%. Die Faser enthielt noch 1,6% N-Methylpyrrolidon.

D) Eine 22%ige Lösung des nach I I) hergestellten Präkondensats in N-Methylpyrrolidon wurde auf einer Nassspinnstrasse zu Fäden versponnen. Die 60 °C heisse Lösung wurde durch eine Düse in ein heisses N-Methylpyrrolidon enthaltendes, wässriges Fällbad gesponnen. Der Spinnfaden wurde über Abzugsrollen in einem geheizten Streckbad nassverstreckt. Dann wurde auf heissen Walzen getrocknet, nochmals verstreckt und aufgespult. Der erhaltene Faden hatte einen Einzeltiter von 15,5 dtex, eine Reissfestigkeit von 10 cN/tex bei einer Reissdehnung von 40% und schrumpfte beim Kochen 0,1%. Der Faden wurde zu einer Stapellänge von 2,6 mm geschnitten.

Ein Teil der geschnittenen Faser wurde in Wasser dispergiert, auf einem Walzwerk (Refiner) durch Friktion fibrilliert und bei Raumtemperatur in dünner Schicht getrocknet.

E) Aus einem Autoklaven wurde eine 12%ige Lösung des Präkondensats gemäss I A) in N-Methylpyrrolidon bei Raumtemperatur unter einem Überdruck mit Druckluft in ein mit Wasser gefülltes Gefäss entspannt, in dem die gleiche Gewichtsmenge wie Präkondensat an 4,4 mm langen Fasern aus Polyacrylnitril von einem Einzeltiter 1,9 dtex suspendiert war. Das bei der Verdüsung abfallende Nass-Komposit aus Pulpe und Fasern wurde aus dem Wasser abfiltriert und durch Waschen von N-Methylpyrrolidon befreit. Das gewaschene Komposit wurde in einem Fluidmischer aufgewirbelt und anschliessend im Trockenschrank unter vermindertem Druck getrocknet. Die Länge der Fibride in der Pulpe war 2 bis 6 mm und ihr Durchmesser 5–12 μm.

F) Die Arbeitsweise gemäss II B) wurde mit der Abweichung wiederholt, dass eine Lösung des Präkondensats gemäss I C) in N-Methylpyrrolidon mit der gleichen Gewichtsmenge einer 10%igen Lösung von Polyacrylnitril in Dimethylformamid unter Rühren gemischt und verarbeitet wurde. Die längsten Fibride in der Pulpe waren 10 mm; der Durchmesser betrug etwa 15 μm.

III) Formmassen
(Beispiele 1 bis 12)
1) Eine Lösung von 850 g eines Phenol-Novolaks (Molverhältnis Phenol:Formaldehyd = 1:0,85), der in Gegenwart von 9 g Salzsäure als Katalysator hergestellt worden ist, und von 150 g Hexamethylentetramin in 1000 g Methanol wurde bei 80°C so lange gerührt, bis es zur Ausbildung einer Dispersion kam, d.h. eine Unverträglichkeit mit dem Lösungsmittel eingetreten war. Diese ca. 50%ige Dispersion wurde zum Aufbau einer Formmasse nach dem Tränkverfahren wie folgt verarbeitet: 8 kg der Fibride gemäss II A) wurden mit 5,74 kg dieser Dispersion, 100 g Zinkstearat als Gleitmittel, 20 g teilverseiftem Esterwachs und 140 g Nigrosinbase als schwarzem Farbstoff in einem Kneter mit Sigmaschaufel vermischt. Dann wurde das Lösungsmittel bei 80°C durch Trocknen entfernt. Man erhielt eine Formmasse in Form eines rieselfähigen Granulats mit sehr gleichmässiger Teilchengrösse.

2) 8 kg einer 50%igen Lösung eines Epoxydharz-Novolaks, hergestellt aus Bisphenol A und Epichlorhydrin im Molverhältnis 1:2,2 (Epoxydzahl 6,6, Molekulargewicht 600) in Methyläthylketon wurde mit 400 g Diäthylentriamin bei 40 bis 80°C bis zur Dispersionsbildung gerührt. 4 kg dieser ca. 50%igen Dispersion wurden wie nach Beispiel 1 mit 1,1 kg Glasfasern (Schnittlänge 6 mm), 1,1 kg der getrockneten Pulpe nach II B), 3,74 kg Kalkstein, 100 g Zinkstearat und 20 g teilverseiftem Esterwachs vermischt und wie nach Beispiel 1 weiterverarbeitet. Die erhaltene Formmasse eignet sich nach Entfernen des Lösungsmittels mit Vorzug für Formteile in der Elektrotechnik. Statt des Diäthylentriamins kann auch ein anderes aliphatisches Polyamin verwendet werden.

3) 8 kg einer 50%igen acetonischen Lösung eines mit 40 g Cyclohexanonperoxyd versetzten ungesättigten Polyesterharzes, aufgebaut aus 2 Mol Maleinsäureanhydrid, 1 Mol Phthalsäureanhydrid und 3 Mol Propandiol-1-3, wurde bei 80 bis 90°C polymerisiert, bis das Produkt mit Aceton unverträglich war. Die Polymerisation wurde durch Zusatz von 0,5 Gew.-% Hydrochinon, bezogen auf Polyester, als Inhibitor abgebrochen. Die Verarbeitung der Dispersion zu einer Formmasse erfolgte wie nach Beispiel 2.

4) Bei der Kondensation eines Melaminharzes aus Melamin und wässrigem Formaldehyd (30%ig) im Molverhältnis Melamin: Formaldehyd = 1:1,8 wurde mit so viel Bariumhydroxydlösung katalysiert, dass in der Lösung ein pH-Wert von 8,8 entstand. Das Stadium der Ausbildung einer Dispersion in wässriger Phase wurde abgefangen, sobald eine feste Phase auftrat. 8 kg dieser ca. 50%igen Dispersion wurden mit 4,88 kg Wollastonit, 1 kg Fasern nach II C), 100 g Calciumstearat und 20 g eines handelsüblichen Fettsäureamids wie nach Beispiel 1 vermischt und zu einer Formmasse weiterverarbeitet.

5) In einem auf 40 bis 50°C geheizten Mischer verarbeitete man einen Ansatz aus 400 g eines kristallisierfähigen aufgeschmolzenen, ungesättigten Polyesters aus äquivalenten Mengen von 2,2-Dimethylpropandiol-1,3 und Dicarbonsäure, bestehend aus 90 Mol-% Fumarsäure und 10 Mol% Terephthalsäure, 60 g Diallylphthalat, 60 g Styrol, 30 g einer 50%igen Lösung von Benzoylperoxyd in Dioctylphthalat, 30 g Zinkstearat und 820 g Kalkstein. Nach Homogenisierung wurden der Masse 450 g einer Faser nach II B) mit einer Faserlänge von ca. 6,5 mm zugesetzt. Das voluminöse warme Mischgut erstarrte nach kurzzeitiger Lagerung bei Raumtemperatur. Die Struktur wurde für die Formmasse durch Behandlung in einer Schlagkreuzmühle noch verbessert.

6) 400 g eines kristallisierfähigen aufgeschmolzenen, ungesättigten Polyesters aus 50 Mol-% Diphenylolpropandioxy-alkyläther, 25 Mol-% Fumarsäure und 25 Mol-% Terephthalsäure, 80 g Diallylphthalat, 30 g einer 50%igen Lösung von Benzoylperoxyd in Dimethylphthalat, 30 g Zinkstearat, 1200 g Kalkstein, 120 g Kaolin, 180 g einer Faser nach II A) mit einer Faserlänge von ca. 2,5 mm wurden in einem auf 50°C erwärmten Mischer vermengt und die teigige warme Masse durch nicht beheizte Walzen geführt. Das erhaltene dünne Fell erstarrte nach kurzer Lagerung bei Raumtemperatur. Nach Zerkleinerung in einer Schlagkreuzmühle erhielt man eine trockene, nichtbackende, schüttfähige Formmasse.

7 bis 12) Die Beispiele 1 bis 6 wurden wiederholt mit der Abweichung, dass statt der Fibride bzw. Pulpe bzw. Fasern jeweils die gleiche Gewichtsmenge von Kompositen verwendet wurde, also:

Beispiel 7: 8 kg Komposit gemäss II E);

Beispiele 8 und 9: Je 1,1 kg der Mischpulpe nach II F).

Beispiel 10: 1 kg Komposit nach II E).

Beispiel 11: 450 g Komposit nach II E).

Beispiel 12: 180 g Komposit nach II F und zusätzlich 60 g einer Polyaramidfaser mit einer Faserlänge von 4,4 mm und einem Titer von 2,4 dtex.

**Patentansprüche**

1. Verwendung einer Formmasse, enthaltend
a) 2,4,5-Triketoimidazolidin-Präkondensate mit endständigen Oxamidsäureester-, Urethan- und/oder Isocyanatgruppen in Form von Fasern oder einer Pulpe als reaktiven Füllstoff und
b) mindestens eine weitere reaktive Komponente eines Bindemittels der Gruppe Phenolharze, Aminharze, Epoxydharze, Polyesterharze, Kohlenwasserstoffharze mit funktionellen Gruppen und/oder Polymerisationsharze mit funktionellen Gruppen zur Herstellung von strahlen-, licht- und/oder wärmebeständigen und/oder abriebfesten Formkörpern, insbesondere Bremsbelägen, Kupplungsscheiben und Zylinderkopfdichtungen.

2. Formmasse, enthaltend
a) 2,4,5-Triketoimidazolin-Präkondensate mit endständigen Oxamidsäureester-, Urethan- und/oder Isocyanatgruppen in Form von Fasern oder einer Pulpe als reaktiven Füllstoff,
b) mindestens eine weitere reaktive Komponente eines Bindemittels der Gruppe Phenolharze, Aminharze, Kohlenwasserstoffharze mit funktionellen Gruppen und/oder Polymerisationsharze mit funktionellen Gruppen und
c) übliche organische und/oder anorganische Füllstoffe.

3. Ausführungsform nach Anspruch 1 oder 2, dadurch gekennzeichnet, dass die Komponente a) ein Reaktionsprodukt aus Bisoxamidsäureestern, Diisocyanaten und gegebenenfalls Polycarbonsäure ist.

4. Ausführungsform nach einem oder mehreren der Ansprüche 1 bis 3, dadurch gekennzeichnet, dass die Formmasse noch übliche organische und/oder anorganische Füllstoffe enthält, wobei vorzugsweise die anorganischen Füllstoffe c) solche mineralischer, silikatischer und/oder metallischer Natur mit hoher thermischer Belastbarkeit, und sofern es sich um nichtmetallische Füllstoffe handelt, mit geringer Wärmeleitfähigkeit sind.

5. Ausführungsform nach Anspruch 3, dadurch gekennzeichnet, dass die Komponente a) zusammen mit Cellulose und/oder deren Derivaten und/oder mit Elastomeren als Komponente c) vorliegt.

6. Ausführungsform nach einem oder mehreren der Ansprüche 1 bis 5, dadurch gekennzeichnet, dass die Komponente a) mindestens eine, vorzugsweise alle der folgenden Eigenschaften hat: spezifische Oberfläche von 10 bis 100 m²/g, Länge der Fibride höchstens 10 mm, Durchmesser der Fibride höchstens 100 µm, vorzugsweise höchstens 30 µm, spezifische Wärme 0,22 bis 0,38, vorzugsweise 0,28 bis 0,36 cal/g und °C und Wasserrückhaltevermögen 50 bis 200 Gew.-%.

7. Ausführungsform nach einem oder mehreren der Ansprüche 1 bis 6, dadurch gekennzeichnet, dass die Komponente a) in Form eines Produktes verarbeitet wird, das nicht mehr als 1 Gew.-% wenigstens eines aprotischen, stark polaren Lösungsmittels enthält.

8. Formmasse, enthaltend
a) als reaktiven Füllstoff das Komposit aus
   a₁) der Pulpe aus 2,4,5-Triketoimidazolin-Präkondensaten mit endständigen Oxamidsäureester-, Urethan und/oder Isocyanatgruppen und
   a₂) einer Pulpe anderer faserbildender Polymerer
   oder
   Fasern aus 2,4,5-Triketoimidazolidinen und/oder anderen Materialien,
b) mindestens eine weitere reaktive Komponente eines Bindemittels der Gruppe Phenolharze, Aminharze, Kohlenwasserstoffharze mit funktionellen Gruppen und/oder Polymerisationsharze mit funktionellen Gruppen und
c) übliche organische und/oder anorganische Füllstoffe.

9. Formmasse nach Anspruch 8, dadurch gekennzeichnet, dass das Komposit in der Weise hergestellt worden ist, dass man die Lösung eines 2,4,5-Triketoamidazolidin-Präkondensats in eine Suspension von Fasern eindüst, vorzugsweise in der Weise, dass eine Lösung des Präkondensats in aprotischen organischen Lösungsmitteln in eine wässrige Suspension der Fasern in einem Koagulationsbad eingedüst wird, in dem Präkondensat und Fasern nicht löslich sind.

10. Formmasse nach Anspruch 8 oder 9, dadurch gekennzeichnet, dass die verwendeten Fasern in dem Komposit so fest in Wirrlage an der Pulpe gebunden sind, dass sie auch nach der Verarbeitung in den Formkörpern in Wirrlage vorliegen.

11. Formmasse nach einem oder mehreren der Ansprüche 8 bis 10, dadurch gekennzeichnet, dass sie noch als Bestandteil der Komponente c) bis zu 80, vorzugsweise bis zu 20 Gew.-%, bezogen auf den Präkondensatanteil der Komponente a), an Fasern mit einer Schnittlänge von 1 bis 100, vorzugsweise 3 bis 10 mm, und einer Dicke von 0,2 bis 12, vorzugsweise von 0,4 bis 6 dtex enthält und dass das Verhältnis von Pulpe zu Faser in dem Komposit der Komponente a) von 5:1 bis 1:5, vorzugsweise von 3:1 bis 1:3 beträgt.

12. Verfahren zur Herstellung eines Komposits aus 2,4,5-Triketoimidazolidin-Präkondensat-Pulpe und Fasern, dadurch gekennzeichnet, dass man die Lösung eines Triketoimidazolidin-Präkondensats in organischen Lösungsmitteln gleichzeitig, aber getrennt mit Fasern verdüst oder in eine Suspension von Fasern in einem Koagulationsbad eindüst, in dem das Präkondensat und die Faser nicht löslich sind, wobei das Lösungsmittel vorzugsweise aprotisch und insbesondere N-Methylpyrrolidon ist.

**Claims**

1. Use of a molding composition comprising
a) 2,4,5-triketoimidazoline precondensates having terminal groups selected from oxamide ester groups, urethane groups and/or isocyanate groups in the form of fibers or a pulp as a reactive filler and
b) at least one further reactive component of a binder selected from the group consisting of phenolic resins, amino resins, epoxy resins, polyester resins, hydrocarbon resins having functional groups and/or polymerization resins having functional groups for the preparation of shaped articles which are resistant to radiation, light and/or heat and/or mechanical action, especially brake linings, clutch disks and cylinder head seals.

2. Molding composition comprising
a) 2,4,5-triketoimidazoline precondensates having terminal groups selected from oxamide ester groups, urethane groups and/or isocyanate groups in the form of fibers or a pulp as a reactive filler,
b) at least one further reactive component of a binder selected from the group consisting of phenolic resins, amino resins, epoxy resins, polyester resins, hydrocarbon resins having functional groups and/or polymerization resins having functional groups and
c) customary organic and/or inorganic fillers.

3. Embodiment according to claim 1 or 2, characterized in that component a) is a reaction product of bis-oxamide esters, diisocyanates and optionally a polycarboxylic acid.

4. Embodiment according to one or more of the claims 1 to 3, characterized in that the molding composition contains additionally customary organic and/or inorganix fillers of which the inorgan-

ic fillers c) are preferably such of mineral, silicate and/or metallic nature having a high thermal resistance and, provided they are non-metallic fillers, having a low heat conductivity.

5. Embodiment according to claim 3, characterized in that component a) is present together with component c) selected from the group consisting of cellulose and/or its derivatives and/or elastomers.

6. Embodiment according to one or more of the claims 1 to 5, characterized in that component a) having at least one, preferably all of the following characteristics: specific surface in the range from 10 to 100 m²/g, length of the fibrids at most 10 mm, diameter of the fibrids at most 100 preferably at most 30 µm, specific heat 0.22 to 0.38 cal/g and °C, and water retention capacity 50 to 200% by weight.

7. Embodiment according to one or more of the claims 1 to 6, characterized in that component a) is used in the form of a product which does not contain more than 1% by weight of an aprotic, strongly polar solvent.

8. Molding composition comprising
a) as a reactive filler the composit of from
a₁) the pulp of 2,4,5-triketoimidazoline precondensates having terminal groups selected from oxamide ester groups, urethane groups and/or isocyanate groups and
a₂) a pulp of other fiber-producing polymers or fibers of 2,4,5-triketoimidazolines and/or other materials,
b) at least one further reactive component of a binder selected from the group consisting of phenolic resins, amino resins, epoxy resins, polyester resins, hydrocarbon resins having functional groups and/or polymerization resins having functional groups and
c) customary organic and/or inorganic fillers.

9. Molding composition according to claim 8, chracterized in that the composit has been prepared in such a way that the solution of a 2,4,5-triketoimidazoline precondensates has been injected into a suspension of fibers, preferably in such a way that a solution of a precondensate in aprotic organic solvents has been injected in the form of an aqueous suspension of fibers into a coagulation bath, in which the precondensate and the fibers are not soluble.

10. Molding composition according to claim 8 or 9, characterized in that the fibers used in the composit are firmly bonded in tangled position to the pulp and are present in tangled position even after the processing into shaped articles.

11. Molding composition according to one or more of the claims 8 to 10, characterized in that it contains additionally fibers as a part of component c) in an amount up to 80, preferably up to 20% by weight, based on the amount of the precondensate of component a), having a length of from 1 to 100, preferably 3 to 10 mm, a thickness of 0.2 to 12, preferably of 0.4 to 6 dtex and that the ratio of pulp to fiber in the composit of the component a) is 5:1 to 1:5, preferably from 3:1 to 1:3.

12. A process for the preparation of a composit of a pulp of 2,4,5-triketoimidazoline precondensate and fibers, characterized in that the solution of a triketoimidazolidine precondensate in organic solvents has been sprayed with fibers at the same time but separately or has been injected into a suspension of fibers in a coagulation bath in which the precondensate and the fiber are not soluble, the solvent is preferably aprotic and especially N-methyl-pyrrolidon.

## Revendications

1. Application d'une matière à mouler contenant:
a) des précondensats de trioxo-2,4,5 imidazolidines à radicaux terminaux d'esters oxamiques, d'uréthannes et/ou isocyanato, sous la forme de fibres ou d'une pulpe, en tant que charge réactive,
b) au moins une autre composante réactive d'un liant du groupe des résines phénoliques, des résines d'amidones, des résines époxydiques, des résines de polyesters, des résines hydrocarbonées à radicaux fonctionnels et/ou des résines de polymérisation à radicaux fonctionnels, pour la fabrication d'objets moulés stables aux rayonnements, à la lumière et/ou à la chaleur et/ou résistants à l'abrasion, plus particulièrement de garnitures de freins, de disques d'embrayage et de joints de culasses.

2. Matière à mouler contenant:
a) des précondensates de trioxo-2,4,5 imidazolidines à radicaux terminaux d'esters oxamiques, d'uréthannes et/ou isocyanato, sous la forme de fibres ou d'une pulpe, en tant que charge réactive,
b) au moins une autre composante réactive d'un liant du groupe des résines phénoliques, des résines d'amines, des résines hydrocarbonées à radicaux fonctionnels et/ou des résines de polymérisation à radicaux fonctionnels, et
c) des charges organiques et/ou inorganiques usuelles.

3. Mode d'exécution selon l'une des revendications 1 et 2, caractérisé en ce que la composante a) est un produit résultant de la réaction de bisesters oxamiques, de diisocyanates et éventuellement d'un acide polycarboxylique.

4. Mode d'exécution selon l'une quelconque des revendications 1 à 3, caractérisé en ce que la matière à mouler contient en outre des charges organiques et/ou inorganiques usuelles, les charges inorganiques c) étant de préférence à base de matières minérales, de silicates et/ou de métaux et étant capables de supporter des contraintes thermiques élevées et, dans la mesure où il s'agit de charges non métalliques, ayant une faible conductibilité thermique.

5. Mode d'exécution selon la revendication 3, caractérisé en ce que la composante a) est associée à de la cellulose et/ou à des dérivés de la cellulose et/ou à des élastomères comme composante c).

6. Mode d'exécution selon l'une quelconque des revendications 1 à 5, caractérisé en ce que la composante a) a au moins une des propriétés suivantes et, de préférence, les a toutes: surface spécifique de 10 à 100 m²/g, longueur des fibrilles d'au plus 10 mm, diamètre des fibrilles d'au plus 100 µm, de préférence d'au plus 30 µm, capacité thermique massique de 920 à 1520 J/kg.K, de préférence de 1170 à 1510 J/kg.K, et pouvoir de rétention d'eau de 50 à 200% en poids.

7. Mode d'exécution selon l'une quelconque des revendications 1 à 6, caractérisé en ce que la composante a) est mise en œuvre sous la forme d'un produit qui ne contient pas plus d'1% en poids d'au moins un solvant aprotique très polaire.

8. Matière à mouler qui contient:
a) comme charge réactive le composite constitué:
   a₁) de la pulpe de précondensates de trioxo-2,4,5 imidazolidines à radicaux terminaux d'esters oxamiques, d'uréthannes et/ou isocyanato et
   a₂) d'une pulpe d'autres polymères aptes à former des fibres, ou de fibres à base de trioxo-2,4,5 imidazolidines et/ou d'autres matières,
b) au moins une autre composante réactive d'un liant du groupe des résines phénoliques, des résines d'amines, des résines hydrocarbonées à radicaux fonctionnels et/ou des résines de polymérisation à radicaux fonctionnels, et
c) des charges organiques et/ou inorganiques usuelles.

9. Matière à mouler selon la revendication 8 caractérisée en ce que la composite a été préparé par injection d'une solution d'un précondensat de trioxo-2,4,5 imidazolidine, à travers une buse, dans une suspension de fibres, une bonne manière d'exécuter cette opération consistant à injecter une solution du précondensat dans des solvants organiques aprotiques, à travers une buse, dans une suspension aqueuse des fibres dans un bain de coagulation dans lequel ni le précondensat ni les fibres ne sont solubles.

10. Matière à mouler selon l'une des revendications 8 et 9, caractérisée en ce que les fibres utilisées dans le composite sont unies à la pulpe dans une situation désordonnée, si solidement que même après la mise en œuvre elles sont encore, au sein des objets moulés, dans une situation désordonnée.

11. Matière à mouler selon l'une quelconque des revendications 8 à 10, caractérisée en ce qu'elle contient en outre, comme constituant de la composante c), jusqu'à 80% en poids, de préférence jusqu'à 20% en poids, par rapport au précondensat de la composante a), de fibres ayant une longueur de coupe de 1 à 100 mm, de préférence de 3 à 10 mm, et une épaisseur de 0,2 à 12 dtex, de préférence de 0,4 à 6 dtex, et en ce que le rapport entre la quantité de pulpe et la quantité de fibres, dans le composite de la composante a), est compris entre 5:1 et 1:5, de préférence entre 3:1 et 1:3.

12. Procédé de préparation d'un composite constitué d'une pulpe et de fibres d'un précondensat de trioxo-2,4,5 imidazolidine, procédé caractérisé en ce qu'on fait passer une solution d'un précondensat de trioxo-imidazolidine dans des solvants organiques, à travers une buse, en même temps que des fibres mais en des endroits séparés, ou l'on injecte la solution d'un précondensat de trioxo-imidazolidine dans des solvants organiques, à travers une buse, dans une suspension de fibres dans un bain de coagulation dans lequel ni le précondensat ni les fibres ne sont solubles, le solvant étant de préférence un solvant aprotique, plus spécialement la N-méthylpyrrolidone.